# EUROPEAN PATENT SPECIFICATION

(11) **EP 1 858 652 B1**
(45) Date of publication and mention of the grant of the patent: **17.11.2010**
(21) Application number: 05823560.7
(22) Date of filing: 23.11.2005
(51) Int. Cl.: B05D 5/00, B29C 39/00, B44C 1/20, B44C 5/04, B60R 13/00, G09F 7/00

(54) **METHOD FOR PRODUCING DECORATIVE ELEMENTS, PARTICULARLY INSIGNIA**
VERFAHREN ZUR HERSTELLUNG VON DEKORATIVEN ELEMENTEN, INSBESONDERE EMBLEME
PROCEDE DE PRODUCTION D'ELEMENTS DECORATIFS, PARTICULIEREMENT D'INSIGNES

(43) Date of publication of application: 28.11.2007
(73) Proprietor: Demak S.r.l., 10156 Torino (IT)
(72) Inventor: GASTALDI, Maurizio, 10131 Torino (IT); MENOZZI, Alberto, I-10126 Torino (IT)
(74) Representative: Gerbino, Angelo
(86) International application number: PCT/IT2005/000685
(87) International publication number: WO 2007/060695

(56) References cited:
- EP-A- 1 342 589
- DE-A1- 3 507 834
- US-A- 2 931 119
- US-A- 3 654 062
- US-A- 4 615 754
- US-B1- 6 701 652
- PATENT ABSTRACTS OF JAPAN vol. 2000, no. 22, 9 March 2001 (2001-03-09) & JP 2001 130195 A (AUTOLIV IZUMI KK), 15 May 2001 (2001-05-15)
- PATENT ABSTRACTS OF JAPAN vol. 007, no. 203 (M-241), 8 September 1983 (1983-09-08) & JP 58 101010 A (AKIRESU KK), 16 June 1983 (1983-06-16)

## Description

The present invention relates to the production of decorative elements, particularly shiny insignia which can be applied to various articles, such as the bodywork of motor cars and motorcycles, domestic appliances, bicycles, boats and the like. Typical examples of these insignia are badges identifying the model, applied to the back of a motor car.

US-A-3 654 062 discloses a molded decorative plaque comprising a body portion of a plastic material and a facing sheet disposed over the front face of the body portion.

In a known method, a shiny insignia is produced by a process which has two distinct stages. In the first stage, a core having the desired profile is produced by the injection moulding of plastics material, for example ABS. In the second stage, this core is immersed in a chromium plating bath so that it is covered with a bright coating layer which imparts a shiny reflective appearance to it.

However, this known method has a number of drawbacks. This is because the execution of the injection moulding and chromium plating stages requires skills of markedly different kinds, which are rarely present in a single business. These stages are therefore typically executed in different locations, resulting in complications in terms of logistics and organization. The chromium plating stage also requires the use of chemical products which constitute a health risk, and the handling of these products therefore requires compliance with burdensome safety regulations, and their disposal in an environmentally compatible way is difficult in all circumstances. On the other hand, the stage of injection moulding requires the availability of moulds which can withstand the high pressures required by this kind of technology. These moulds are therefore very costly, making their preparation economically justifiable only in the case of large mass production.

One object of the present invention is therefore to overcome the aforementioned drawbacks of the known art.

According to the present invention, this object is achieved by means of a method having the characteristics claimed in Claim 1. Preferred characteristics of the method are indicated in the claims dependent on Claim 1.

The method according to the invention has a series of stages which can easily be executed in a sequential way in a single installation, without the use of injection moulding and chromium plating methods. It is therefore easily applied, equally suitable for short and long production runs, inexpensive, and has virtually no environmental impact.

A further object of the present invention is a decorative element which can be produced by using the aforementioned method.

This decorative element has the advantageous property of being highly flexible. It can therefore be adapted to curved surfaces at the time of its application, without having to be produced with a corresponding specified curvature in advance. By contrast, the decorative elements of the known art are markedly rigid, and must already have a corresponding curved profile before they are applied to curved surfaces.

Further advantages and characteristics of the invention will be made clear by the following detailed description, provided by way of example and without restrictive intent, with reference to the attached drawings, in which:

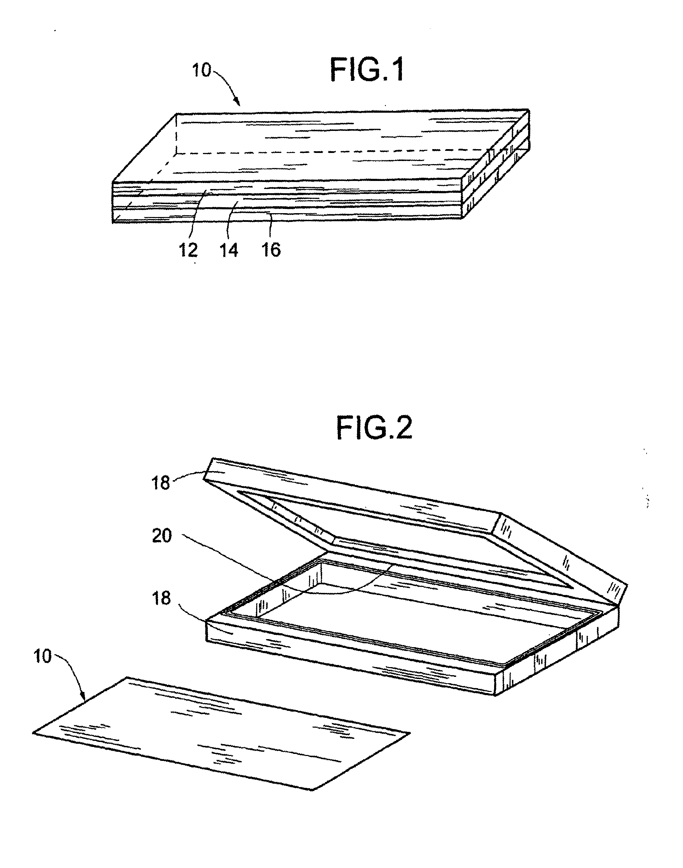

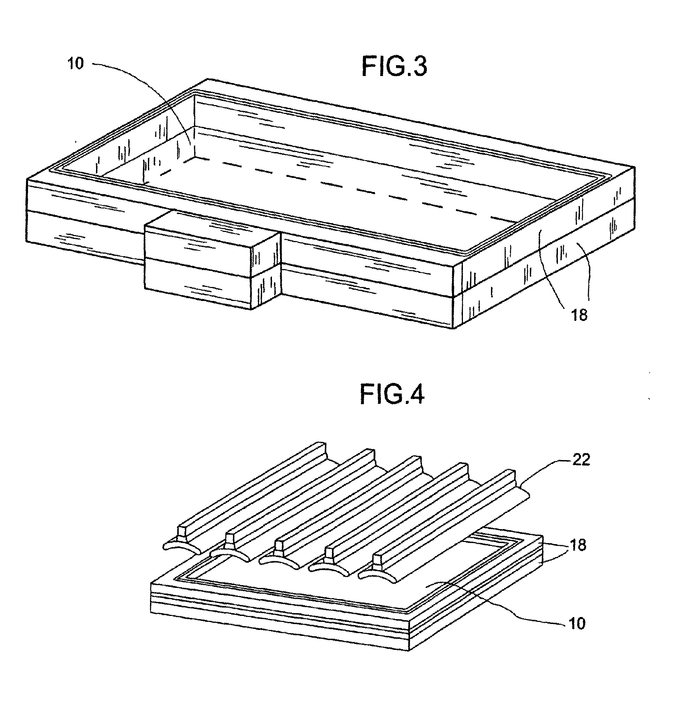

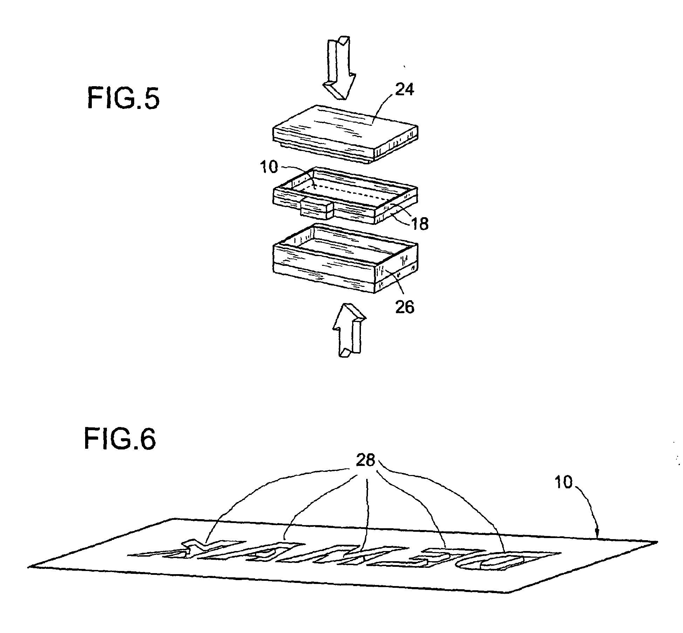

- Figures 1 to 12 are schematic illustrations of successive stages of a method for producing decorative elements according to the invention.

In a method for producing decorative elements, particularly insignia, the starting material (Fig. 1) is a multiple-layer film 10 comprising a first transparent protective layer 12, a second decorative layer 14 containing one or more pigments, and a third supporting layer 16 of thermoformable plastics material.

The first transparent protective layer 12 can consist, for example, of polyester, polyvinylidene fluoride or poly(meth)acrylate. The second layer 14 contains, for example, metallic pigments, while the third layer 16 can consist of a material such as ABS or polyurethane. The metallic pigments, preferably of the aluminium and/or magnesium type, of the second layer 14 give the film 10 a brilliant reflective appearance, a satin appearance, or any other known type of metallized appearance. However, it is also possible to use non-metallic pigments which give the film a coloured or patterned appearance, for example by reproducing a carbon fibre effect. The total thickness of the film 10 can typically be in the range from 200 to 500 µm.

A rectangular portion of the multiple-layer film 10 described above is inserted (Fig. 2) into a holder formed by two substantially rectangular frames 18 hinged in a book-like way on one longer side 20. The two frames 18 are then closed on to each other (Fig. 3), thus securing the portion of film 10 along its perimeter. The film is then heated (Fig. 4) to a temperature preferably in the range from 150 to 200°C by exposing it to the radiation of a lamp 22, and it is then (Fig. 5) clamped between a die 24 and a matrix 26 having, respectively, projections and recesses of the desired shape, so that it is thermoformed. The thermoforming produces a plurality of recesses 28, whose shape corresponds to that of the insignia to be produced, in the portion of film 10 (Fig. 6). In Figure 6, the recesses 28 are shown as having the shape of the letters making up the word "DEMAK". Clearly, the shapes of the recesses could all be identical to each other and/or could be different from the shapes of letters of the alphabet, and there could be virtually any number of recesses, or only one of them, thus enabling a single large insignia to be produced.

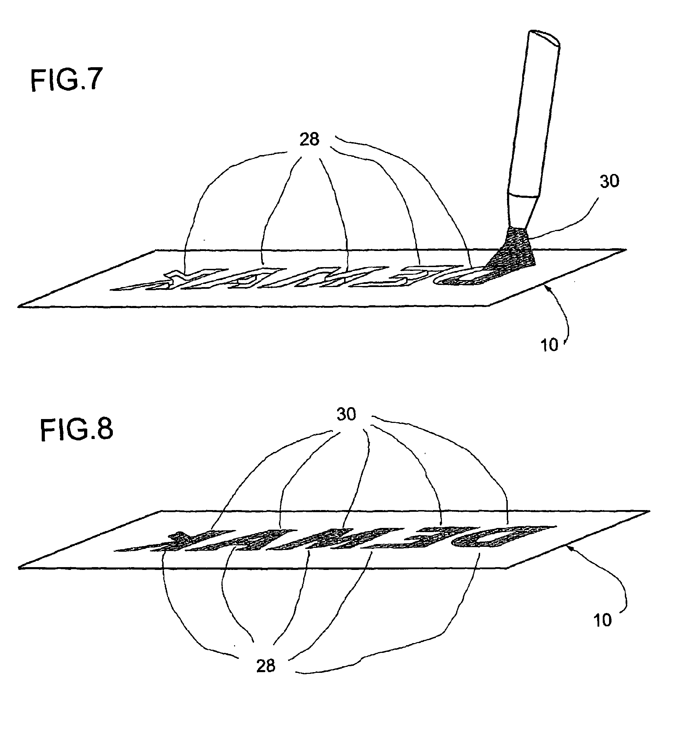

In a subsequent stage of the operation (Fig. 7), a hardening resin 30 - typically of the polyurethane type - is poured into the recesses 28, so that it fills them and adheres to the third layer 16. The thermoformed film 10 (Fig. 8) is strong and substantially self-supporting, and therefore does not require dedicated supporting devices during the pouring stage, in which it acts as a containment vessel for the resin, or afterwards.

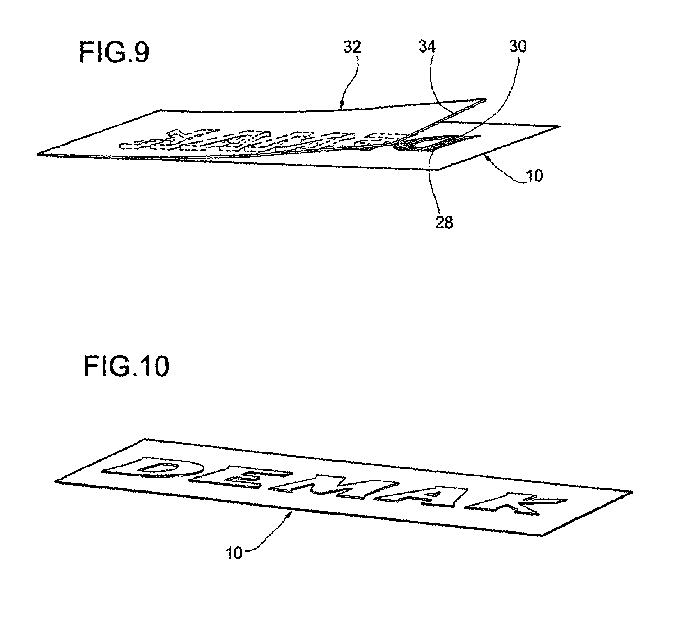

A covering sheet 32 is then applied (Fig. 9) to the third layer 16 of the film 10, so as to enclose the resin 30 in the various recesses 28 (see Fig. 10, in which the formed portion of film 10 is shown in an inverted configuration with respect to the preceding figures). Advantageously, the covering sheet 32 is of the double-sided adhesive type and has a protective liner 34 on the side facing away from the film 10, this liner being removable at the moment of application of the decorative element.

The resin 30 enclosed in the recesses 28 then undergoes a hardening process, which can be accelerated by heating in a kiln. This kiln heating can be carried out, if necessary, even before the application of the covering sheet 32 to the third layer 16 of the film 10.

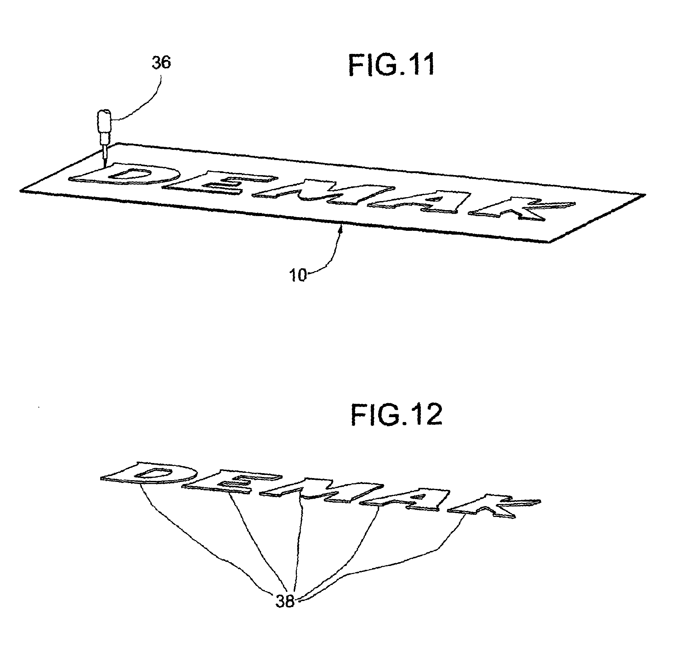

Finally (Fig. 11), a cutting device such as a punching machine or a laser beam machine 36 is used to cut the film 10 around the various recesses 28 filled with resin 30 and sealed by the sheet 32, thus producing (Fig. 12) insignia 38 of the desired shape. These insignia have a stratified structure comprising a layer of film 10, a layer of poured resin 30, and a covering sheet layer 32, superimposed on each other. In its turn, the layer of film 10 comprises a first transparent protective layer 12, a second decorative layer 14 containing at least one pigment, and a third supporting layer 16 of plastics material to which the poured resin 30 adheres.

## Claims

1. Method for producing one or more decorative elements, particularly insignia (38), comprising the stages of:
- thermoforming a multiple-layer film (10) comprising a first transparent protective layer (12), a second decorative layer (14) containing at least one pigment, and a third supporting layer (16) of thermoformable plastics material, so as to form at least one recess (28) in the said film (10),
- pouring into the said at least one recess (28) a hardening resin (30) which adheres to the third layer (16) of the film (10),
- applying a covering sheet (32) to the third layer (16) of the film (10) so as to enclose the poured resin (30), which undergoes a hardening process, and
- cutting the film (10) around the said at least one recess (28), thus producing a stratified decorative element comprising a portion of the said film (10), a layer of resin (30) and a portion of the said sheet (32).

2. Method according to Claim 1, in which the said first transparent protective layer (12) of the multiple-layer film (10) consists of a plastics material selected from the group consisting of polyesters, polyvinylidene fluoride and poly(meth)acrylates.

3. Method according to any one of the preceding claims, in which the said second layer (14) of the multiple-layer film (10) contains metallic pigments, preferably of the aluminium and/or magnesium type, giving the film (10) a brilliant reflective or satin appearance.

4. Method according to any one of the preceding claims, in which the said third layer (16) of the multiple-layer film (10) consists of a material selected from the group consisting of ABS and polyurethane.

5. Method according to any one of the preceding claims, in which the said multiple-layer film (10) has a thickness in the range from 200 to 500 µm.

6. Method according to any one of the preceding claims, in which the said multiple-layer film (10) is thermoformed at a temperature in the range from 150 to 200°C.

7. Method according to any one of the preceding claims, in which a plurality of recesses (28) is formed in the said film (10) in the thermoforming stage.

8. Method according to any one of the preceding Claims 1 to 6, in which a single recess (28) is formed in the said film (10) in the thermoforming stage.

9. Method according to any one of the preceding claims, in which the thermoformed film acts as a self-supporting vessel into which the hardening resin is subsequently poured.

10. Method according to any one of the preceding claims, in which the said hardening resin (30) is of the polyurethane type and is subjected to a heating stage to accelerate its hardening.

11. Method according to Claim 1, in which the said heating stage takes place before and/or after the stage of application of the covering sheet (32).

12. Method according to any one of the preceding claims, in which the covering sheet (32) is of the double-sided adhesive type and has a protective liner (34) on the side facing away from the film, this liner being removable at the moment of application of the decorative element.

13. Method according to Claim 1, in which the cutting stage is carried out by means of a punching machine or a laser beam machine (36).

14. Stratified decorative element, particularly insignia (38), which can be produced by the method according to any one of the preceding claims, the said decorative element comprising a film layer (10), a layer of poured resin (30) and a covering sheet layer (32) superimposed on each other, the said film layer (10) in turn containing at least a first transparent protective layer (12), a second decorative layer (14) containing at least one pigment and a third supporting layer (16) of plastics material.

## Patentansprüche

1. Verfahren zur Herstellung von einem oder mehreren Dekorelementen, im Besonderen von Plaketten (38), wobei das Verfahren folgende Schritte umfasst:
- Thermoformen eines mehrschichtigen Films (10), der eine erste lichtdurchlässige Schutzschicht (12), eine zweite Dekorschicht (14), die zumindest einen Farbstoff enthält, sowie eine dritte Trägerschicht (16) aus einem thermoformbaren Kunststoff umfasst, um zumindest eine Ausnehmung (28) in diesem Film (10) auszubilden,
- Gießen eines aushärtbaren Harzes (30) in die zumindest eine Ausnehmung (28), das an der dritten Schicht (16) des Films (10) anhaftet,
- Aufbringen einer Abdeckschicht (32) auf der dritten Schicht (16) des Films (10), um das gegossene Harz (30) einzuschließen, das einem Aushärtevorgang unterworfen wird, und
- Schneiden des Films (10) rund um die zumindest eine Ausnehmung (28), wodurch ein geschichtetes Dekorelement erzeugt wird, das einen Teil des Films (10), eine Schicht aus dem Harz (30) sowie einen Teil der Schicht (32) umfasst.

2. Verfahren gemäß Anspruch 1, wobei die erste lichtdurchlässige Schutzschicht (12) des mehrschichtigen Films (10) aus einem Kunststoff besteht, der aus einer Gruppe ausgewählt wird, die Polyester, Polyvinylidenfluorid sowie Poly(meth)acrylate umfasst.

3. Verfahren gemäß irgendeinem der bisherigen Ansprüche, wobei die zweite Schicht (14) des mehrschichtigen Films (10) metallische Farbstoffe enthält, vorzugsweise Aluminium- und/oder Magnesium-Farbstoffe, die dem Film (10) ein glänzendes, reflektierendes oder satinartiges Aussehen verleihen.

4. Verfahren gemäß irgendeinem der bisherigen Ansprüche, wobei die dritte Schicht (16) des mehrschichtigen Films (10) aus einem Material besteht, das aus einer Gruppe ausgewählt wird, die ABS und Polyurethan umfasst.

5. Verfahren gemäß irgendeinem der bisherigen Ansprüche, wobei der mehrschichtige Film (10) eine Dicke im Bereich von 200 bis 500 µm besitzt.

6. Verfahren gemäß irgendeinem der bisherigen Ansprüche, wobei der mehrschichtige Film (10) bei einer Temperatur thermogeformt wird, die im Bereich von 150 bis 200 °C liegt.

7. Verfahren gemäß irgendeinem der bisherigen Ansprüche, wobei im Film (10) im Thermoform-Schritt eine Vielzahl von Ausnehmungen (28) ausgebildet wird.

8. Verfahren gemäß irgendeinem der bisherigen Ansprüche 1 bis 6, wobei im Film (10) im Thermoform-Schritt eine einzige Ausnehmung (28) ausgebildet wird.

9. Verfahren gemäß irgendeinem der bisherigen Ansprüche, wobei der thermogeformte Film einen selbsttragenden Behälter bildet, in den anschließend das aushärtbare Harz gegossen wird.

10. Verfahren gemäß irgendeinem der bisherigen Ansprüche, wobei das aushärtbare Harz (30) ein Polyurethan-Harz ist, das einem Heizschritt unterzogen wird, um sein Aushärten zu beschleunigen.

11. Verfahren gemäß Anspruch 1, wobei der Aushärtschritt vor und/oder nach dem Schritt erfolgt, bei dem die Abdeckschicht (32) aufgebracht wird.

12. Verfahren gemäß irgendeinem der bisherigen Ansprüche, wobei die Abdeckschicht (32) aus einer doppelseitig klebenden Schicht besteht, wobei sie auf der Seite, die vom Film weg gerichtet ist, eine Decklage (34) besitzt, wobei diese Decklage dann entfernt werden kann, wenn das Dekorelement angebracht wird.

13. Verfahren gemäß Anspruch 1, wobei der Schneideschritt mit einer Stanzmaschine oder mit einer Laserstrahl-Maschine (36) ausgeführt wird.

14. Geschichtetes Dekorelement, im Besonderen eine Plakette (38), die mit dem Verfahren gemäß irgendeinem der bisherigen Ansprüche hergestellt werden kann, wobei das Dekorelement eine Filmschicht (10), eine Schicht aus einem gegossenen Harz (30) sowie eine Abdeckschicht (32) umfasst, die übereinander liegen, wobei die Filmschicht (10) ihrerseits zumindest eine erste lichtdurchlässige Schutzschicht (12), eine zweite Dekorschicht (14), die zumindest einen Farbstoff enthält, sowie eine dritte Tragschicht (16) aus Kunststoff enthält.

## Revendications

1. Procédé de production d'un ou plusieurs éléments décoratifs, en particulier des insignes (38), comprenant les étapes consistant à :
thermoformer un film multicouches (10) comprenant une première couche de protection transparente (12), une deuxième couche décorative (14) contenant au moins un pigment, et une troisième couche de support (16) faite d'un matériau plastique thermoformable, de manière à former au moins un évidement (28) dans ledit film (10),
verser dans ledit au moins un évidement (28) une résine de durcissement (30) qui adhère à la troisième couche (16) du film (10),
appliquer une feuille de couverture (32) à la troisième couche (16) du film (10) de manière à enfermer la résine versée (30), qui subit un processus de durcissement, et
découper le film (10) autour dudit au moins un évidement (28), en produisant ainsi un élément décoratif stratifié comprenant une partie dudit film (10), une couche de résine (30) et une partie de ladite feuille (32).

2. Procédé selon la revendication 1, dans lequel ladite première couche de protection transparente (12) du film multicouches (10) est constituée d'un matériau plastique choisi parmi le groupe consistant en polyesters, fluorure de polyvinylidène, et poly(méth)acrylates.

3. Procédé selon l'une quelconque des revendications précédentes, dans lequel ladite deuxième couche (14) du film multicouches (10) contient des pigments métalliques, de préférence du type aluminium et/ou magnésium, donnant au film (10) un aspect réfléchissant ou satiné brillant.

4. Procédé selon l'une quelconque des revendications précédentes, dans lequel ladite troisième couche (16) du film multicouches (10) est constituée d'un matériau choisi parmi le groupe consistant en ABS et polyuréthane.

5. Procédé selon l'une quelconque des revendications précédentes, dans lequel ledit film multicouches (10) présente une épaisseur dans le domaine de 200 à 500 µm.

6. Procédé selon l'une quelconque des revendications précédentes, dans lequel ledit film multicouches (10) est thermoformé à une température dans le domaine de 150 à 200°C.

7. Procédé selon l'une quelconque des revendications précédentes, dans lequel une pluralité d'évidements (28) est formée dans ledit film (10) à l'étape de thermoformage.

8. Procédé selon l'une quelconque des revendications précédentes 1 à 6, dans lequel un seul évidement (28) est formé dans ledit film (10) à l'étape de thermoformage.

9. Procédé selon l'une quelconque des revendications précédentes, dans lequel le film thermoformé sert de récipient auoportant dans lequel la résine de durcissement est ensuite versée.

10. Procédé selon l'une quelconque des revendications précédentes, dans lequel ladite résine de durcissement (30) est du type polyuréthane et est soumise à une étape de chauffage pour accélérer son durcissement.

11. Procédé selon la revendication 1, dans lequel ladite étape de chauffage a lieu avant l'étape ou après l'étape d'application de la feuille de couverture (32).

12. Procédé selon l'une quelconque des revendications précédentes, dans lequel la feuille de couverture (32) est du type adhésif double face et possède un revêtement protecteur (34) sur le côté opposé au film, ce revêtement étant amovible au moment de l'application de l'élément décoratif.

13. Procédé selon la revendication 1, dans lequel l'étape de découpe est réalisée au moyen d'une machine emporte-pièce ou d'une machine à faisceau laser (36).

14. Élément décoratif stratifié, en particulier un insigne (38) qui peut être produit par le procédé selon l'une quelconque des revendications précédentes, ledit élément décoratif comprenant une couche de film (10), une couche de résine versée (30) et une couche de feuille de couverture (32) superposées les unes sur les autres, ladite couche de film (10) contenant à son tour au moins une première couche de protection transparente (12), une deuxième couche décorative (14) contenant au moins un pigment et une troisième couche de support (16) en matériau plastique.
